# EUROPÄISCHE PATENTSCHRIFT

(11) **EP 1 969 815 B1**
(45) Veröffentlichungstag und Bekanntmachung des Hinweises auf die Patenterteilung: **20.05.2015**
(21) Anmeldenummer: 06828574.1
(22) Anmeldetag: 30.11.2006
(51) Int. Cl.: H04L 29/08, G06Q 10/10, H04L 29/06

(54) **ANORDNUNG ZUR NUTZUNG VON ERP-SYSTEMEN AUF VORZUGSWEISE MOBILEN ENDGERÄTEN**
ARRANGEMENT FOR USING ERP-SYSTEMS ON, PREFERABLY, MOBILE DEVICES
DISPOSITIF POUR UTILISER DES SYSTEMES ERP SUR DES TERMINAUX DE PREFERENCE MOBILES

(30) Priorität: 29.12.2005 DE 202005020364 U
(43) Veröffentlichungstag der Anmeldung: 17.09.2008
(73) Patentinhaber: CSB-System AG, 52511 Geilenkirchen (DE)
(72) Erfinder: SCHIMITZEK, Peter, 52511 Geilenkirchen (DE)
(74) Vertreter: Weihrauch, Frank
(86) Internationale Anmeldenummer: PCT/DE2006/002113
(87) Internationale Veröffentlichungsnummer: WO 2007/073713

(56) Entgegenhaltungen:
- US-A1- 2002 120 691
- US-A1- 2002 194 314
- US-A1- 2005 086 344

## Beschreibung

Die Erfindung bezeichnet eine Anordnung zur Nutzung von insbesondere ERP-Anwendungen durch unterschiedliche Clients in Form von vorzugsweise beliebigen mobilen Endgeräten, die einen Datenaustausch mit internen ERP-Systemen über ein Extranet und Intranet ermöglicht, wobei ein Benutzer in Abhängigkeit von vorgegebenen Berechtigungen aus unterschiedlichen Anwendungen wählen kann und den Zugriff auf interne ERP-Systeme erhält.

Allgemein üblich ist es, über externe und interne Netzwerke auf Informationen, wie Einträge in Datenbanken, mittels mobiler Endgeräte zuzugreifen oder diese abzurufen.

Ebenso bekannt sind Lösungen, bei denen eine "Push"-Zustellung von Nachrichten oder anderen Informationen an ein Endgerät eines Users erfolgt. Es kann dabei die Synchronisation von Daten auf internen Datenbanken mit denen des Endgeräts erfolgen oder auch zusätzlich ein mobiler Zugriff auf beispielsweise Datendienste, Terminplaner, Internet oder Firmendaten ermöglicht werden.

Aus der Druckschrift WO 01/78342 A2 ist ein solches System und ein Verfahren zur "Push"-Zustellung von Informationen von einem Host-System an ein mobiles Datenendgerät bekannt. Nachdem vom Host-System benutzerdefiniert festgelegte Änderungen von Daten festgestellt wurden, kann der User die zugestellten Daten in einem bestimmten Ordner des Endgerätes ablegen oder die Software auf dem mobilen Gerät synchronisiert automatisch den jeweiligen Inhalt der Ordner mit denen des Host-Systems.

Eine weiteres, auf diesem Prinzip beruhendes System und Verfahren wird in der Druckschrift WO 02/25890 A2 beschrieben, das Daten von einem Host-System an ein oder mehrere mobile Datenkommunikationsgeräte über ein drahtloses Paket-Datennetzwerk mittels einer speziellen Software weiterleitet. Jeder User kann dabei individuell festlegen, welche Daten nach Empfang durch das Host-System an ihn weitergeleitet werden, wobei das mobile Endgerät periodisch einen Server kontaktiert und dann die für dessen Adresse bestimmten Daten überträgt, oder vom Netzwerk wird eine Verbindung mit dem mobilen Endgerät hergestellt, das dann das Datennetzwerk kontaktiert, eine Netzwerkadresse erhält sowie nachfolgend der Server die umadressierten Daten an das mobile Gerät sendet.

Derartige Lösungen erfordern in der Regel spezielle mobile Endgeräte mit einer dafür angepassten Software. Es sind große Speicherkapazitäten für die Software des Gerätes und der Anwendung sowie der übertragenen Daten erforderlich.

Neben dem Übertragen von Daten und dem Abruf von Informationen aus Datenbanken, besteht keine Möglichkeit, vom mobilen Endgerät das Generieren von Daten individueller Anforderungen auf einem Host-System über Netzwerke zu initiieren und im Wesentlichen nur deren Ergebnis an das mobile Endgerät zu übertragen.

Ein System zum Generieren und Nutzen von individualisierten, datenbankgestützten Anwendungen wird in der Druckschrift US 2002/194314 beschrieben. Danach ist der Nutzer mit seinem Endgerät über ein Netzwerk mit einem Server, auf dem Anwendungen gehostet sind, verbunden.

Unter Verwendung seines Endgeräts kann der Nutzer selbst Anwendungen für sich individuell konfigurieren.

Die eingegebenen Konfigurationsinformationen werden vom Endgerät über das Netzwerk an den Server übertragen, der die individuell angepassten Anwendungen generiert.

Die zugehörigen Konfigurationsinformationen werden zusammen mit den von den Anwendungen benutzten Daten für dem späterem Zugriff auf einem Datenbankserver abgelegt.

Die Konfigurationsinformationen können in Form von Scripten auf beliebige Endgeräte übertragen werden, mit denen ein Zugriff auf die Anwendungen über ein Netzwerk erfolgen kann.

Die Konfiguration der Anwendungen kann nur durch einzelne Nutzer oder Nutzergruppen selbst erfolgen und ist nicht individuell für bestimmte Endgeräte vorkonfiguriert.

Auf Grund dessen, dass der Nutzer mit seinem Endgerät zuerst auf den Server mit den gehosteten Anwendungen zugreift, der dann im Rückgriff auf die Datenbank mit den individuellen Konfigurationsinformationen auf einem anderen Server die individuelle Konfiguration lädt, ergeben sich zudem lange Zugriffszeiten.

Die Aufgabe der Erfindung besteht darin, eine Anordnung zur Nutzung von insbesondere ERP-Anwendungen durch unterschiedliche Clients in Form von vorzugsweise beliebigen mobilen Endgeräten zu entwickeln, die einen Datenaustausch mit internen ERP-Systemen über ein Extranet und Intranet ermöglicht, wobei ein Benutzer in Abhängigkeit von vorgegebenen Berechtigungen aus unterschiedlichen Anwendungen wählen kann, die nicht auf seinem Endgerät gespeichert sind, die erst nach deren individueller Auswahl mittels Scripten ausführbar sind und den Zugriff auf interne ERP-Systeme ermöglicht.

Die Aufgabe wird durch die im Patentanspruch 1 aufgeführten Merkmale gelöst. Bevorzugte Weiterbildungen ergeben sich aus den Unteransprüchen.

Eine Anordnung zur mobilen Nutzung eines ERP (Enterprise Ressource Planning)-Systems, insbesondere für CRM (Customer Relationship Management), besteht im Wesentlichen aus einem mobile-ERP-Server, mittels dessen ein Zugang und die Kommunikation von beliebigen Endgeräten als Clients, vorzugsweise mobilen Endgeräten über ein Extranet mit einem Intranet, das ein ERP-System mit einer Anzahl von Modulen aufweist, realisiert wird. Clients können insbesondere Mobiltelefone, Pocket-PC's, andere geeignete mobile Endgeräte als auch Endgeräte mit Web-Anwendungen sein, die drahtlos oder drahtgebunden über Accesspoints und Netzwerke, wie Internet, Telefonnetze oder Mobilfunknetze, eine Verbindung mit dem mobile-ERP-Server herstellen.

Eine besondere Ausführungsform stellt die Anordnung mit einem externen ERP-Systems dar, das über das Extranet, den mobile-ERP-Server mit den ERP-Systemen im Intranet verbunden ist, wobei der Datenaustausch zwischen den ERP-Systemen über ein getunneltes VPN (Virtual Private Network), beispielsweise über das Internet erfolgt. Es lassen sich hierdurch Datenbestände online zwischen verschiedenen Systemen mit unterschiedlichen Programmversionen online spiegeln oder abgleichen, wie zwischen dem ERP-System am Hauptsitz einer Firma und dem in deren entfernter Niederlassung.

Der User baut mit seinem (mobilen) Endgerät eine Verbindung zu einem Server auf und meldet sich auf diesem an. Nach diesem Einloggen auf einem mobile-ERP-Server wird dem Endgerät des Users ein Menü mit einer Anzahl von auswählbaren Anwendungen in Form von Scripten zur Benutzung von ERP-Logik auf einem Firmenserver übertragen und auf einem Display dargestellt.

Die einzelnen Module der ERP-Logik sind gekapselt.

Der User wählt ein Script aus dem Menü, diese Auswahl wird an den mobile-ERP-Server gesendet. Vom Server wird das Script für die ausgewählte Anwendung an das Endgerät übertragen, ausgeführt und der User kann mittels dessen die ERP-Logik auf dem Server nutzen.

So können beispielsweise vom Standort des Users Aufgaben zur Auswertungen von Debitoren- und Kreditoren-Konten, der Warenwirtschaft zu Lieferungen und Leistungen, Transportplanungen sowie auch Terminplanungen, Phonemanagement oder Event-Management initiiert werden.

An das Endgerät werden dann entsprechend der Anfrage des Users an das oder die Module des ERP-Systems, nur Feldinhalte des Ergebnisses der Anfrage übertragen und auf dem Display des Endgeräts dargestellt.

Auf dem Server sind unter anderem für jeden User / jedes Endgerät spezifische Zugangsberechtigungen zu einzelnen Modulen des ERP-Systems sowie spezifische, individuell angepasste Menüs mit Scripten für die zu visualisierenden Masken sowie den Rechten der individuell zu nutzenden Anwendungen als Container hinterlegt.

Es ergeben sich hieraus n-dimensionale Darstellungs- und Ausprägungsmöglichkeiten einer Software, die user- und gerätespezifisch angepasst sind.

Vom Server werden die Informationen vom Endgerät stets aktiv übernommen.

Die Vorteile der Erfindung liegen insbesondere in der erforderlichen geringen Speicherkapazität für die Scripte auf den mobilen Endgeräten, des nicht erforderlichen Updates derselben, da diese stets in der aktuellen Version übertragen werden und somit stets die aktuelle ERP-Logik als Anwendungen auf dem Server zum Genieren der Daten für das Ergebnis einer Abfrage und Dateneingabe in das System genutzt wird.

Für den User ergibt sich eine komfortable mobile Nutzung des ERP-Systems, da er selbst keine Konfiguration der Anwendungen vornehmen muss, sondern individuell für ihn und sein mobiles Endgerät konfigurierte und angepasste Menüs mit Scripten der zu nutzenden Anwendungen zur Verfügung stehen.

Vorteilhaft wirkt sich auch die Nutzung von Standardschnittstellen zwischen den Netzwerken aus, so dass jedes beliebige Endgerät eines berechtigten Users die ERP-Logik sowie weitere firmeninterne Anwendungen nutzen kann, wobei dies unabhängig vom Betriebssystem ist und übliche Sicherheitstechniken, wie zur Authentifizierung und Datenübertragung einbezogen werden.

Ein weiterer Sicherheitseffekt ergibt sich aus der Tatsache, dass auf den mobilen Endgeräten keine Anwendungen und Ergebnisdaten gespeichert werden, somit bei Verlust eines Geräts kein Missbrauch durch Zugriff Dritter auf firmeninterne Daten möglich ist.

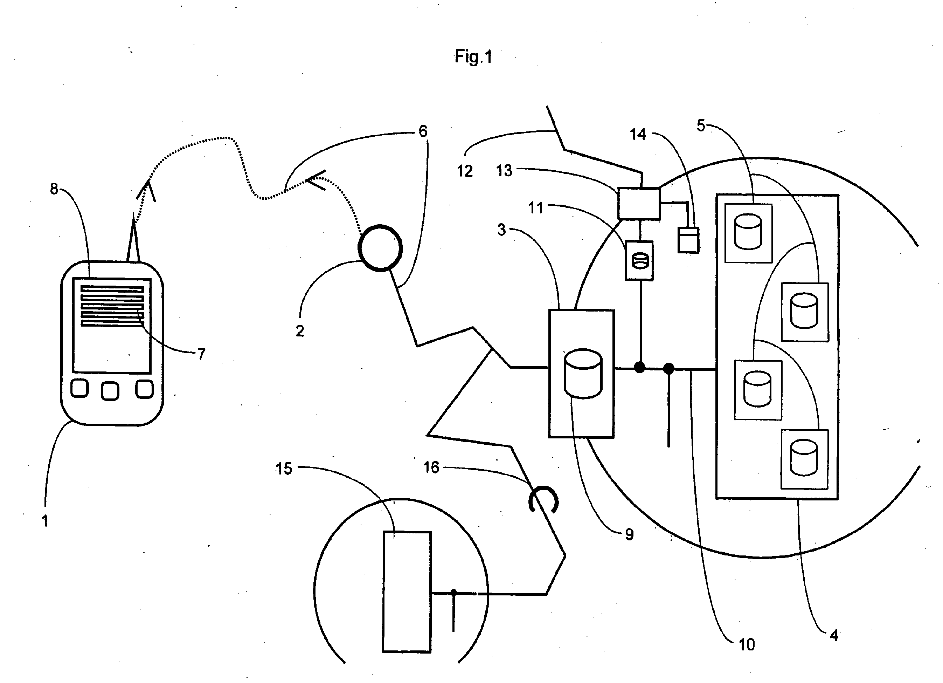

Die Erfindung wird als Ausführungsbeispiel an Hand von Fig. 1 als schematische Darstellung einer Anordnung zur Nutzung von ERP-Systemen mittels eines mobilen Endgeräts näher erläutert.

Eine Anordnung zur vorzugsweise mobilen Nutzung eines ERP-Systems und weiterer Anwendungen weist im Wesentlichen ein, für den Datenaustausch geeignetes, mobiles Endgerät 1, einen üblichen Accesspoint 2, einen mobile-ERP-Server 3, einem ERP-System 4 mit ERP-Logik in Form von Modulen 5 auf. Zur Nutzung und Ausführung von Anwendungen aus dem Bereich des ERP und des firmeninternen Managements, baut der User mit seinem mobilen Endgerät 1 über den Accesspoint 2 eine Verbindung 6 zum mobile-ERP-Server 3 auf und meldet sich mit seiner persönlichen Identifikation an. Nach einer Authentifzierung wird vom mobile-ERP-Server 3 über die Verbindung 6, ein drahtloses und/oder drahtgebundenes Extranet, ein Script an das mobile Endgerät 1 übertragen, das zur Wiedergabe einer Maske mit einem Menü 7 auf einem Display 8 mit einer Anzahl spezifisch vom User nutzbarer Anwendungen dient, wobei das Script für jede im Menü 7 wählbare Anwendung eine Befehlszeile enthält, mit der das Übertragen von Scripten zum Starten von Anwendungen, wie Modulen 5 des ERP-Systems 4 an das mobile Endgerät 1 vom mobile-ERP-Server 3 initiiert werden kann.

Menge und Art der vom User nutzbaren Anwendungen ist abhängig von individuell konfigurierten Berechtigungen als auch von den technischen Gegebenheiten des mobilen Endgeräts 1.

Auf dem mobile-ERP-Server 3 sind in einem speziellen Speicherbereich 9 individuell für jeden User sowie für jedes mobile Endgerät 1 konfigurierte, spezifische Zugangsberechtigungen zu den Modulen 5 des ERP-Systems 4 und weiteren Anwendungen in Verknüpfung mit den somit individuell angepassten Menüs 7 mit den Scripten für die auf dem Display 8 des mobilen Endgeräts 1 zu visualisierenden Masken, den damit verknüpften Befehlszeilen zum Aufrufen von Anwendungen sowie den Rechten der jeweils zugänglichen Anwendungen von Modulen 4 als Container hinterlegt.

Nach Auswahl einer im Menü 7 angebotenen Anwendung durch den User wird die entsprechende Befehlszeile des Scripts vom mobilen Endgerät 1 an den mobile-ERP-Server 3 übertragen und von diesem erhält das mobile Endgerät 1 ein Script zur Nutzung der Logik eines oder mehrerer Module 5 des ERP-Systems 4 als Antwort. Auf dem Display 8 wird die für die Nutzung der ausgewählten Anwendung erforderliche Maske dargestellt. In bekannter Weise gibt der User in diese Maske die erforderlichen Daten, wie beispielsweise Adressen, Artikel, Konditionen, zum Generieren einer Auswertung oder Erfassen von Aufträgen für einen bestimmten Kunden ein.

Mit dem Bestätigen der Eingaben werden vom mobilen Endgerät 1 diese Daten und ein Befehl zum Verarbeiten der Daten an den mobile-ERP-Server 3 übertragen, der diese über ein Intranet 10, wie ein LAN, an die Anwendung der ERP-Logik des entsprechenden Moduls 5 des ERP-Systems 4 übergibt. Die als Ergebnis der Datenverarbeitung durch die ERP-Logik generierten Daten werden über den mobile-ERP-Server 3 und die Verbindung 6 an das mobile Endgerät 1 übertragen und als Ergebniszeilen auf dem Display 8 dargestellt.

Optional besteht auch die Möglichkeit, wenn ein Drucker mit dem mobilen Endgerät 1 verbunden wird, das Ergebnis als Hardcopy auszugeben.

Nach dem Abarbeiten eines ersten Scripts für Anwendungen, lassen sich die weiteren auswählen und starten.

Das Script für die Auswahl der Anwendungen in der Maske des Menüs 7 lässt sich gegebenenfalls auf dem mobilen Endgerät 1 speichern. Bei Verbindungsaufnahme des mobilen Endgeräts 1 mit dem mobile-ERP-Server 3 wird dann stets geprüft, ob eine neue Version vorhanden ist, die dann übertragen wird, es erfolgt kein Update des alten Scripts, sondern dieses wird ersetzt.

Der User hat damit de facto ein mobiles ERP-System 4 auf seinem mobilen Endgerät 1, mit dem insbesondere Aufgaben auf dem Gebiet des CRM schnell und zuverlässig bearbeitet werden können.

Des Weiteren hat der User bei bestehender Verbindung zum mobile-ERP-Server 3 die Möglichkeit über das Intranet 10 auf Daten eines Event- und Phonemanagementservers 11 zuzugreifen, der unter anderem aus einem öffentlichen Netz 12 über eine Telefonanlage 13 und/oder andere Netzwerke für ihn an einem Arbeitsplatz 14 in seiner Firma eingegangene Nachrichten verwaltet. Diese Nachrichten lassen sich vom mobilen Endgerät 1 aus abrufen, weiterleiten und bearbeiten. Ebenso sind beispielsweise Rufumleitungen und Terminplanungen vom aktuellen Standort des Users mittels seines mobilen Endgeräts 1 realisierbar.

Die beschriebene Anordnung und deren Funktion ist nicht auf mobile Endgeräte 1 begrenzt. Das mobile Endgerät 1 ist auch als mobiler Client zu verstehen.

Ein User kann einen üblichen Internetzugang über einen Rechner benutzen, wobei ein Internetbrowser die Funktion des mobilen Clients mit grundsätzlich gleichen Funktionen übernimmt.

Neben den Funktionen eines mobilen ERP-Systems 4 lassen sich spezielle Merkmale eines Webshops realisieren. So kann über eine Befehlszeile online der Lagerbestand eines Artikels geprüft, der Artikel bestellt und im Bestand reserviert werden, wobei keine Verknüpfung über die Auftragsbearbeitung- des ERP-Systems erfolgt, der reservierte Artikel wird anderen Usern nicht mehr im Bestand ausgewiesen.

In einer weiteren Ausführungsform der Anordnung zur Nutzung von ERP-Systemen, ist ein externes ERP-System 15 mit dem ERP-System 4 über ein VPN 16 in einem öffentlichen Netzwerk, wie Internet, den mobile-ERP-Server 3 und das Intranet 10 verbunden. Auf diese Weise erfolgt der Datenaustausch in sicherer Weise. Datenbestände an unterschiedlichen Standorten lassen sich damit online auf voneinander verschiedenen Systemen spiegeln.

Auf dem mobile-ERP-Server 3 sind neben Komponenten zur Authentifiziereng der User und Geräte übliche Sicherheitsroutinen zur Abwehr von Gefahren sowie zur Verschlüsselung implementiert.

Der User kann auch Zugriff auf die Daten des externen ERP-Systems 15 erhalten, indem diese über das ERP-System 4 abgerufen werden.

### Verwendete Bezugszeichen

- 1: mobiles Endgerät
- 2: Accesspoint
- 3: mobile-ERP-Server
- 4: ERP-System
- 5: Module
- 6: Verbindung
- 7: Menü
- 8: Display
- 9: spezieller Speicherbereich
- 10: Intranet
- 11: Event- und Phonemanagementserver
- 12: öffentliches Netz
- 13: Telefonanlage
- 14: Arbeitsplatz
- 15: externes ERP-System
- 16: VPN (Virtual Private Network)

## Patentansprüche

1. Anordnung zur mobilen Nutzung eines Enterprise Resource Planning Systems, ERP-Systems, und weiterer Anwendungen durch User, aufweisend ein, für den Datenaustausch geeignetes mobiles Endgerät, an das über ein Netzwerk Scripte übertragen und auf diesem abgelegt sind sowie das mittels Scripten auf Anwendungen auf einem Server zugreifen und diese ausführen kann, einen Accesspoint, ein ERP-System mit ERP-Logik als Anwendungen in Form von Modulen, die über Extranet und Intranet in Verbindung stehen, **dadurch gekennzeichnet,**
**dass** in einer Verbindung (6) vom mobilen Endgerät (1) zum ERP-System (4) über das Intranet (10) zwischen der Verbindung (6) und dem Intranet (10) ein mobile-ERP-Server (3) mit einem Speicherbereich (9) angeordnet ist, in dem individuell für jeden User sowie für jedes mobile Endgerät (1) konfigurierte Zugangsberechtigungen zu den Modulen (5) des ERP-Systems (4) mit deren Logik als Anwendungen in Verknüpfung mit individuell angepassten Scripten zur Visualisierung von Menüs (7) mit Scripten zum Starten von Anwendungen und für die zu visualisierenden Eingabemasker der zu nutzenden Anwendungen, auf einem Display (8) des mobilen Endgeräts (1), gespeichert sind.

2. Anordnung zur mobilen Nutzung eines ERP-Systems und weiterer Anwendungen nach Anspruch 1, **dadurch gekennzeichnet, dass** auf dem Display (8) des mobilen Endgeräts (1) die Eingabemaske einer Anwendung aus den Modulen (5) des ERP-Systems (4) visualisiert ist, nachdem mit der Auswahl einer im Menü (7) angebotenen Anwendung die zugehörige Befehlszeile des Scripts an den mobile-ERP-Server (3) übertragen und von diesem als Antwort das Script für die Anwendung eingegangen und gespeichert ist.

3. Anordnung zur mobilen Nutzung eines ERP-Systems und weiterer Anwendungen nach den Ansprüchen 1 und 2, **dadurch gekennzeichnet,**
**dass** die im Ergebnis der Verarbeitung vom User in die Eingabemaske der Anwendung eingegebener Daten durch die ERP-Logik zurückerhaltenen, generierten Daten als Ergebniszeilen auf dem Display (8) dargestellt sind.

4. Anordnung zur mobilen Nutzung eines ERP-Systems und weiterer Anwendungen nach den Ansprüchen 1 bis 3, **dadurch gekennzeichnet,**
**dass** das Script für die Auswahl der Anwendungen in der Eingabemaske des Menüs 7 auf dem mobilen Endgerät 1 gespeichert ist.

5. Anordnung zur mobilen Nutzung eines ERP-Systems und weiterer Anwendungen nach den Ansprüchen 1 bis 4, **dadurch gekennzeichnet,**
**dass** nach Verbindungsaufnahme des mobilen Endgeräts 1 mit dem mobile-ERP-Server 3, bei Vorliegen einer neuen Version des Scripts für die das Menü (7) zur Auswahl einer Anwendung kein Update des gespeicherten Scripts erfolgt, sondern nach Ersatz des Scripts das Menü (7) aktualisiert dargestellt ist.

6. Anordnung zur mobilen Nutzung eines ERP-Systems und weiterer Anwendungen nach den Ansprüchen 1 bis 5, **dadurch gekennzeichnet,**
**dass** über das ERP-System (4) und ein VPN (16) und den mobile-ERP-Server (3) von einem externen ERP-System (15) abgerufene Daten auf dem mobilen Endgerät (1) vorliegen und auf dem Display (8) visualisiert sind.

7. Anordnung zur vmobilen Nutzung eines ERP-Systems und weiterer Anwendungen nach den Ansprüchen 1 bis 6, **dadurch gekennzeichnet,**
**dass** auf dem mobile-ERP-Server 3 der Zugriff auf Daten eines Event- und Phonemanagementservers 11 über das Intranet 10 vom mobilen Endgerät (1) implementiert ist.

8. Anordnung zur mobilen Nutzung eines ERP-Systems und weiterer Anwendungen nach den Ansprüchen 1 bis 7, **dadurch gekennzeichnet,**
**dass** das mobile Endgerät (1) ein mobiler Client in Form eines Internetbrowsers auf einem Rechner mit Internetzugang ist.

## Claims

1. Arrangement for the mobile use of an enterprise resource planning system, ERP system, and of further applications by a user, having a mobile terminal which is suitable for data interchange, to which scripts are transmitted via a network and stored thereon and which can use scripts to access applications on a server and to execute them, an access point, an ERP system with ERP logic as applications in the form of modules which are connected by means of extranet and intranet, **characterized**
**in that** a connection (6) from the mobile terminal (1) to the ERP system (4) via the intranet (10) contains a mobile ERP server (3), arranged between the connection (6) and the intranet (10), with a memory area (9) in which are stored access authorizations, configured individually for each user and for each mobile terminal (1), for the modules (5) of the ERP system (4) with the logic of said modules as applications with a link to individually customized scripts for visualizing menus (7), with scripts for starting applications and for the input masks which are to be visualized for the applications to be used, on a display (8) of the mobile terminal (1).

2. Arrangement for the mobile use of an ERP system and of further applications according to Claim 1, **characterized**
**in that** the display (8) of the mobile terminal (1) visualizes the input mask of an application comprising the modules (5) of the ERP system (4) after the selection of an application provided in the menu (7) has prompted the associated command line of the script to be transmitted to the mobile ERP server (3) and the script for the application has been received from the latter in response and stored.

3. Arrangement for the mobile use of an ERP system and of further applications according to Claims 1 and 2, **characterized**
**in that** the generated data received back by the ERP logic as a result of the processing of data which are input into the input mask of the application by the user are shown on the display (8) as result lines.

4. Arrangement for the mobile use of an ERP system and of further applications according to Claims 1 to 3, **characterized**
**in that** the script for selecting the applications in the input mask of the menu (7) is stored on the mobile terminal (1).

5. Arrangement for the mobile use of an ERP system and of further applications according to Claims 1 to 4, **characterized**
**in that** after the mobile terminal (1) has set up a connection to the mobile ERP server (3), the stored script is not updated when a new version of the script for the menu (7) for selecting an application is available, but rather the menu (7) is shown in updated form after the script has been replaced.

6. Arrangement for the mobile use of an ERP system and the further applications according to Claims 1 to 5, **characterized**
**in that** the ERP system (4) and a VPN (16) and the mobile ERP server (3) are used to provide data retrieved from an external ERP system on the mobile terminal (1) and to visualize them on the display (8).

7. Arrangement for the mobile use of an ERP system and further applications according to Claims 1 to 6, **characterized**
**in that** access to data on an event and phone management sever (11) via the intranet (10) by the mobile terminal (1) is implemented on the mobile ERP server (3).

8. Arrangement for the mobile use of an ERP system and the further applications according to Claims 1 to 7, **characterized**
**in that** the mobile terminal (1) is a mobile client in the form of an internet browser on a computer with internet access.

## Revendications

1. Dispositif pour une utilisation mobile d'un système de planification des ressources d'une entreprise, d'un système ERP ainsi que d'autres applications par des utilisateurs, comprenant un terminal mobile adapté à un échange de données, sur lequel des scripts sont transférés par l'intermédiaire d'un réseau et déposés sur celui-ci, et qui peut au moyen de scripts agir sur des applications sur un autre serveur et les effectuer, un point d'accès, un système ERP avec une logique ERP comme applications sous la forme de modules reliés par extranet et intranet,
**caractérisé en ce qu'**
un serveur ERP de mobiles (3) est prévu dans une liaison (6) entre le terminal mobile (1) et le système ERP (4) par intranet (10), entre la liaison (6) et intranet (10), ce serveur ERP de mobiles comprenant une plage de mémoire (9) dans laquelle sont enregistrées des autorisations d'accès au module (5) du système ERP (4) conformées individuellement pour chaque utilisateur aussi que pour chaque terminal mobile (1) avec leur logique en tant qu'applications en combinaison avec des scripts adaptés individuellement pour permettre la visualisation de menus (7), avec des scripts permettant de commencer des applications et pour les masques d'entrée à visualiser des applications utilisées, sur un afficheur (8) du terminal mobile (1).

2. Dispositif pour une utilisation mobile d'un système ERP ainsi que d'autres applications selon la revendication 1,
**caractérisé en ce que**
l'afficheur (8) du terminal mobile (1) visualise le masque d'entrée d'une application du module (5) du système ERP (4) après que la sélection d'une application offerte dans le menu (7), avec les lignes d'ordre correspondantes du script soient transmises au serveur ERP des mobiles (3) et que celui-ci entre le script pour l'application et l'enregistre comme réponse.

3. Dispositif pour une installation mobile d'un système ERP ainsi que d'autres applications selon les revendications 1 et 2,
**caractérisé en ce que**
les données introduites par l'utilisateur comme résultats du traitement dans le masque d'entrée de l'application sont représentées par la logique ERP comme des données générées, renvoyées, comme lignes de résultats sur l'afficheur (8).

4. Dispositif pour une utilisation mobile d'un système ERP ainsi que d'autres applications selon les revendications 1 à 3,
**caractérisé en ce que**
le script de la sélection des applications est enregistré dans le masque d'entrée du menu (7) sur le terminal mobile (1).

5. Dispositif pour une utilisation mobile d'un système ERP ainsi que d'autres applications selon les revendications 1 à 4,
**caractérisé en ce qu'**
après l'établissement de la liaison du terminal mobile (1) avec le serveur ERP des mobiles (3), en présence d'une nouvelle version du script pour laquelle le menu (7) pour la sélection d'une application n'a pas de mise à jour du script enregistré, mais après remplacement du script, le menu actualisé (7) est représenté.

6. Dispositif pour une utilisation mobile d'un système ERP ainsi que d'autres applications selon les revendications 1 à 5,
**caractérisé en ce que**
les données appelées par le système ERP (4), par un VPN (16) et par le serveur ERP des mobiles (3) à partir d'un système ERP (15) externe, sont présentes sur le terminal mobile (1) et sont visualisées sur l'afficheur (8).

7. Dispositif pour une utilisation mobile d'un système ERP ainsi que d'autres applications selon les revendications 1 à 6,
**caractérisé en ce que**
l'accès aux données d'un serveur de gestion d'évènements et de phonèmes (11) est implémenté sur le serveur ERP des mobiles (3) par intranet (10) à partir du terminal mobile (1).

8. Dispositif pour une utilisation mobile d'un système ERP ainsi que d'autres applications selon les revendications 1 à 7,
**caractérisé en ce que**
le terminal mobile (1) est un client mobile sous la forme d'un navigateur internet sur un calculateur avec accès à internet.
